# EUROPÄISCHE PATENTSCHRIFT

(11) **EP 1 004 950 B1**
(45) Veröffentlichungstag und Bekanntmachung des Hinweises auf die Patenterteilung: **22.09.2004**
(21) Anmeldenummer: 99122410.6
(22) Anmeldetag: 10.11.1999
(51) Int. Cl.: G05B 19/05

(54) **Verfahren zur Programmierung eines Automatisierungssystems**
Method for programming an automatic device
Méthode de programmation d'un automate

(30) Priorität: 23.11.1998 DE 19853968
(43) Veröffentlichungstag der Anmeldung: 31.05.2000
(73) Patentinhaber: SIEMENS AKTIENGESELLSCHAFT, 80333 München (DE)
(72) Erfinder: Bischoff, Torsten-Holger, 91126 Schwabach (DE); Hirschmann, Claudia, 90459 Nürnberg (DE); Pfahlmann, Lothar, Dipl.-Inf., 90475 Nürnberg (DE); Schmitz, Heiko, 83607 Holzkirchen (DE)

(56) Entgegenhaltungen:
- EP-A- 0 770 945
- EP-B- 0 671 027
- DE-A- 4 212 370
- DE-A- 19 638 987
- US-A- 5 530 643
- US-A- 5 576 946
- ZWINGE P: "OBJEKTORIENTIERTES PROGRAMMIEREN UND VISUALISIEREN VON AUTOMATISIERUNGSSYSTEMEN" , AUTOMATISIERUNGSTECHNISCHE PRAXIS - ATP,DE,OLDENBOURG VERLAG. MUNCHEN, VOL. 33, NR. 9, PAGE(S) 485-490 XP000264961 ISSN: 0178-2320

## Beschreibung

Die EP 0 770 945 A1 beschreibt ein Verfahren zum automatisierten Erstellen eines graphischen verfahrenstechnischen Schemas für einen konkreten technischen Prozess. Das konkrete Schema wird durch Umwandlung eines abstrakten Schemas unter Berücksichtigung von Anwendervorgaben und von Abbildungsvorschriften erstellt. Das abstrakte Schema ist als hierarchisches System mit mehreren Baugruppen-Ebenen konzipiert, die jeweils so genannte Platzhalter für Komponenten und deren Verbindungen enthalten. In den einzelnen Ebenen sind Baugruppenvarianten wählbar.

Aus US 5 576 946 ist ein Steuersystem zur Erstellung, Änderung, Inbetriebnahme und Steuerung eines Herstellungsprozesses bekannt, welches Bildschirmsymbole als Metaphern für tatsächliche Prozessschritte nutzt. Die Bildschirmsymbole können am Bildschirm aus einer Bibliothek von Symbolen ausgewählt werden, und selektiv in den Fertigungsprozess eingefügt, zugeordnet, editiert oder gelöscht werden. Jedes Bildschirmsymbol repräsentiert einen diskreten Prozessschritt.

Der Fachartikel Zwinge, P.: "Objektorientiertes Programmieren und Visualisieren von Automatisierungssystemen", Automatisierungstechnische Praxis-ATP, Oldenbourg Verlag, München, volume 33, No. 9, Seiten 485 bis 490, beschreibt ein Prozessleitsystem zum Programmieren von Automatisierungssystemen und zum Visualisieren des Anlagengeschehens in einem Arbeitsschritt. Im Gegensatz zur üblichen Programmerstellung der dazu getrennt verlaufenden Visualisierung eines Prozesses wird dabei ein Hilfsmittel zur Konfiguration eines kompletten Automations-Netzwerkes zur Verfügung gestellt. Diese Arbeitsschritte werden in einem gemeinsamen, objektorientierten Editor zusammengefasst. Weitere Funktionen, wie z.B. der Zugriff zu Standard-Modulbibliotheken, die Erstellung anwenderspezifischer Bibliotheken, Fenster- und Zoomtechniken, Batch- und Reportfunktionen sowie Software-Testroutinen sollen den Zeitaufwand für die Erstellung von Steuer- und Regelprogrammen erheblich reduzieren.

Die vorliegende Erfindung betrifft ein Verfahren zur Programmierung eines Automatisierungssystems, mit dem sich wiederkehrende, ähnliche Netzwerke rationell erstellen lassen.

Merkmale, Vorteile und Anwendungsmöglichkeiten der Erfindung ergeben sich aus der nachfolgenden Beschreibung eines Ausführungsbeispiels. Dabei bilden alle beschriebenen und/oder bildlich dargestellten Merkmale für sich oder in beliebiger Kombination den Gegenstand der vorliegenden Erfindung.

Auf dem Automatisierungssystem läuft ein Anwenderprogramm, das die zu erledigende Aufgabe realisiert. Das Anwenderprogramm kann durch graphische Programmiersprachen (KOP,FUP) geschrieben werden.

Wichtigstes Merkmal der graphischen Programmiersprachen ist, daß das Programm in einzelne Netzwerke zerfällt. Jedes Netzwerk realisiert einen logischen Ausdruck.

In der Praxis kommt es häufig vor, daß sich ein logischer Ausdruck (mit verschiedenen Operanden versehen) wiederholt.

Durch ein geeignetes Verfahren soll der Anwender so unterstützt werden, daß er nur noch die jeweils unterschiedlichen Operanden eingeben muß.

Dazu wird ein Muster-Netzwerk abgelegt, das statt Operanden Platzhalter enthält.

Dazu wurde eine Sprache (s. Anlage) entwickelt, die den mathematischen Ausdruck des Netzwerkes als Zeichenkette abgelegt.

Diese Zeichenkette kann gespeichert und später wieder geladen und graphisch verändert werden.

Zur Programmierung eines echten Netzwerks lädt der Anwender sich ein Muster-Netzwerk und ersetzt die darin enthaltenen Platzhalter durch konkrete Operanden. Dabei wird er durch das Programmierwerkzeug unterstützt.

Dieses echte Netzwerk kann der Anwender schließlich übersetzen und auf dem Automatisierungssystem zur Ausführung bringen.

Dies wird anhand dreier Beispiele nachfolgend näher erläutert:

Damit der Anwender ein Netzwerk mit z. B. verschiedenen Operanden leichter wiederverwenden kann, wird ein Muster-Netzwerk mit der entwickelten mathematischen Sprache abgelegt. Die Grammatik dieser Sprache ergibt sich aus der Darstellung am Ende dieser Beschreibung. Mittels der Grammatik wird eine Zeichenkette generiert, die dann abgelegt wird.

In dem folgenden ersten Beispiel ist in der mittleren Spalte der Tabelle die entsprechende Zeichenkette auslesbar. Die einzelnen Zeichen sind untereinander aufgeschrieben, ihre Kurzbeschreibung ist links angegeben. In der rechten Spalte ist zu den Zeichen ein erläuternder Kommentar angegeben. Er kann entsprechend auf die anderen Beispiele bezogen werden. Es wird nur die Zeichenkette abgespeichert. Mittels der Grammatik und der Reihenfolge der Ausdrücke kann die Zeichenkette verstanden werden.

Im dritten Beispiel ist ein Muster-Netzwerk ohne Operanden vorgestellt. Die Stellen der fehlenden Operanden werden in der Zeichenkette durch NOP0, ..., LPAREN und RPAREN gekennzeichnet.

Bei einem längeren Netzwerk mit mehreren Ausdrücken werden diese Ausdrücke der Reihe nach nach dem in den Beispielen aufgezeigten Schema in der Zeichenkette abgelegt.

Im ersten Beispiel wird ein Netzwerk mit absoluten Operanden gemäß der definierten Grammatik wie folgt codiert:

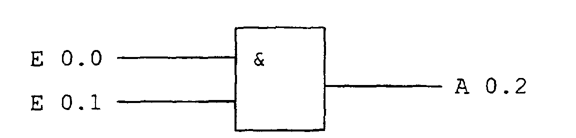

| Beschreibung | Zeichenkette | Kommentar |
|---|---|---|
| curlabel | 0 | Label des Netzwerks; hier ist kein Label angegeben. |
| treeptr -> net id | 0 | Netzwerk-Kennungs-Nummer |
| root -> line | 0 | Zeile der Root |
| TREE_SALO_VERSION | 1 | Versionskennung |
| savesymb | 1 | Merker, ob Symbole gespeichert werden |
| | | |
| | | Jetzt folgen die Operationen und Items des Netzwerks: |
| op | TREE_AND | Die erste Operation ist eine logische UND-Verknüpfung ("&"). |
| negated | 0 | Die Operation ist nicht negiert. |
| line | 0 | Zeilenangabe zu dem "&" |
| LPAREN | LPAREN | Innerhalb der linken u. rechten Klammer (left, right parenthese) stehen die zur "&"-Verknüpfung gehörenden Items. |
| op | TREE_CONTACT | Am ersten "Beinchen" der "&"-Verknüpfung ist ein Kontakt vorgesehen. |
| negated | 0 | Der Kontakt ist nicht negiert. |
| line | 62976 | Zeilenangabe |
| | | |
| OP | OP | Es folgen Angaben zu dem Item (Operanden). |
| 1 | 0 | Länge des Item-Symbols (hier gibt es kein Symbol). |
| para -> operr | 0 | Interne Angabe |
| line | 62976 | Zeilenangabe |
| *fl&0xf | 0 | Interne Angabe |
| | | |
| abs description follows | 1 | Es folgt die Absolutbeschreibung des Items. |
| | | |
| scope | 0 | Interne Angaben zum Item: z.B. ist es ein lokales Item? |
| abs -> db no | 0 | DB-Nummer |
| opid | 104 | Kombination aus range (hier: 2) und type (hier: 1), (opid = abs -> opid.type << 5 + range); range codiert - Eingang(2), - Ausgang(3), - Merker, ..., type codiert - Bit(1)-, - Byte(2)-, - Word-, - ... operand. |
| abs -> value.constant | 0 | Abhängig von opid kann man daraus Konstante, oder wie in diesem Fall x_byte (0), x_bit(0) auslesen. |
| sw_typ.cit_data-typ | 0 | Datentyp des Items |
| sw_typ.number | 0 | Nummer des Datentyps |
| anz_elem | 0 | wie viele Elemente.. |
| item_count | 0 | ... |
| | | |
| SEMI | SEMI | Die Items werden durch ein ";" getrennt. |
| op | TREE_CONTACT | Am zweiten "Beinchen" der "&"-Verknüpfung ist ein weiterer Kontakt vorgesehen. |
| negated | 0 | Die Angaben folgen analog zum 1. Item (s.o.) |
| line | 62976 | |
| OP | OP | |
| l | 0 | |
| para -> operr | 0 | |
| line | 62976 | |
| *fl&0xf | 0 | |
| | | |
| abs description follows | 1 | |
| | | |
| scope | 0 | |
| abs -> db_no | 0 | |
| opid | 136 | Kombination aus range (hier:2) und type (hier: 1) |
| abs -> value.constant | 65536 | Daraus ist x_byte (0), x_bit(1) auslesbar. |
| | | |
| sw_typ.cit_data-typ | 0 | |
| sw_typ.number | 0 | |
| anz_elem | 0 | |
| item_count | 0 | |
| | | |
| RPAREN | RPAREN | Durch diese rechte Klammer (right parenthese) werden die zur "&"-Verknüpfung gehörenden Items eingeklammert. |
| op | TREE_COIL | Im Netzwerk folgt eine Ergebnisbox. |
| negated | 0 | Das "=" ist nicht negiert. |
| line | 1 | Zeilenangabe |
| | | |
| OP | OP | Es folgt die Beschreibung des zugehörigen Items. |
| l | 0 | Länge des Item-Symbols (hier gibt es kein Symbol). |
| para -> operr | 0 | interne Angabe |
| line | 1 | Zeilenangabe zum Item |
| *fl&0xf | 0 | interne Angabe |
| | | |
| abs description follows | 1 | Es folgt die Absolutbeschreibung des Items. |
| | | |
| scope | 0 | Es folgen interne Angaben; (s.o.) |
| abs -> db_no | 0 | |
| opid | 168 | Kombination aus range (hier:3) und type (hier: 1) |
| abs -> value.constant | 131072 | Daraus ist x_byte (0), x_bit(2) auslesbar. |
| | | |
| sw_typ.cit_data-typ | 0 | |
| sw_typ.number | 0 | |
| anz_elem | 0 | |
| item_count | 0 | |

Für das zweite Beispiel wird von einem Netzwerk mit symbolischen Operanden ausgegangen:

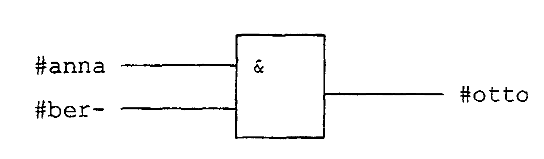

| Beschreibung | Zeichenkette | Kommentar |
|---|---|---|
| curlabel | 0 | |
| treeptr -> net_id | 1002 | |
| root -> line | 0 | |
| TREE_SALO_VERSION | 1 | |
| savesymb | 1 | |
| | | |
| op | TREE_AND | |
| negated | 0 | |
| line | 0 | |
| LPAREN | LPAREN | |
| op | TREE_CONTACT | |
| negated | 0 | |
| line | 62136 | |
| | | |
| OP | OP | Es folgen Angaben zu dem Item. |
| 1 | 5 | Das Symbol zu dem Item besteht aus 5 Zeichen. |
| para -> opstr[0], ..., para -> opstr[4] | # **anna** | Symbol |
| para -> operr | 0 | interne Angabe |
| line | 62136 | |
| *fl&0xf | 1 | |
| | | |
| no abs description follows | 0 | |
| | | |
| | | |
| SEMI | SEMI | |
| op | TREE_CONTACT | |
| negated | 0 | |
| line | 62136 | |
| | | |
| OP | OP | s. o. |
| l | 6 | |
| para -> opstr[0], ..., para -> opstr[5] | # **berta** | |
| para -> operr | 0 | |
| line | 62136 | |
| *fl&0xf | 1 | |
| | | |
| no abs description follows | 0 | |
| | | |
| | | |
| RPAREN | RPAREN | |
| op | TREE_COIL | |
| negated | 0 | |
| line | 9 | |
| | | |
| OP | OP | s. o. |
| 1 | 5 | |
| para -> opstr[0], ..., para -> opstr[4] | # **otto** | |
| para -> operr | 0 | |
| line | 9 | |
| *fl&0xf | 1 | |
| | | |
| no abs description follows | 0 | |

In einem dritten Beispiel wird von einem Netzwerk ohne Operanden ausgegangen:

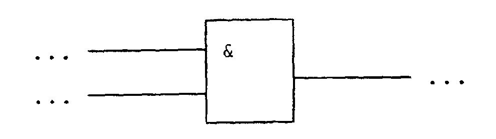

| Beschreibung | Zeichenkette | Kommentar |
|---|---|---|
| curlabel | 0 | |
| treeptr -> net_id | 1 | |
| root -> line | 0 | |
| TREE_SALO_VERSION | 1 | |
| savesymb | 1 | |
| | | |
| op | TREE_AND | |
| negated | 0 | |
| line | 12 | |
| LPAREN | LPAREN | |
| op | TREE_NOP | Das erste "&"-Beinchen hat keinen Operanden. |
| negated | 0 | |
| line | 62136 | |
| | | |
| OP | OP | |
| 1 | 0 | |
| para -> operr | 0 | |
| line | 0 | |
| *fl&0xf | 0 | |
| | | |
| no abs description follows | 0 | |
| | | |
| node -> opnd. handle | 0 | |
| LPAREN | LPAREN | |
| RPAREN | RPAREN | |
| | | |
| | | |
| SEMI | SEMI | |
| op | TREE_NOP | Das zweite "&"-Beinchen hat keinen Operanden. |
| negated | 0 | |
| line | 62136 | |
| | | |
| OP | OP | |
| 1 | 0 | |
| para -> operr | 0 | |
| line | 62136 | |
| *fl&0xf | 0 | |
| | | |
| no abs description follows | 0 | |
| | | |
| node -> opnd.handle | 0 | |
| LPAREN | LPAREN | |
| RPAREN | RPAREN | |
| | | |
| | | |
| RPAREN | RPAREN | |
| op | TREE_COIL | An den folgenden Angaben wird erkannt, daß kein Operand angegeben wurde. |
| negated | 0 | |
| line | 9 | |
| | | |
| OP | OP | |
| 1 | 0 | |
| para -> operr | 0 | |
| line | 9 | |
| *fl&0xf | 0 | |
| | | |
| abs description follows | 1 | |
| | | |
| scope | 0 | |
| abs -> db_no | 0 | |
| opid | 0 | Kombination aus range (hier: 0, d.h. none) und type (hier: 0, d.h. none) |
| abs -> value.constant | 0 | |
| | | |
| sw_typ.cit_datatyp | 211 | |
| sw_typ.number | 70 | |
| anz_elem | 62048 | |
| item_count | 61656 | |

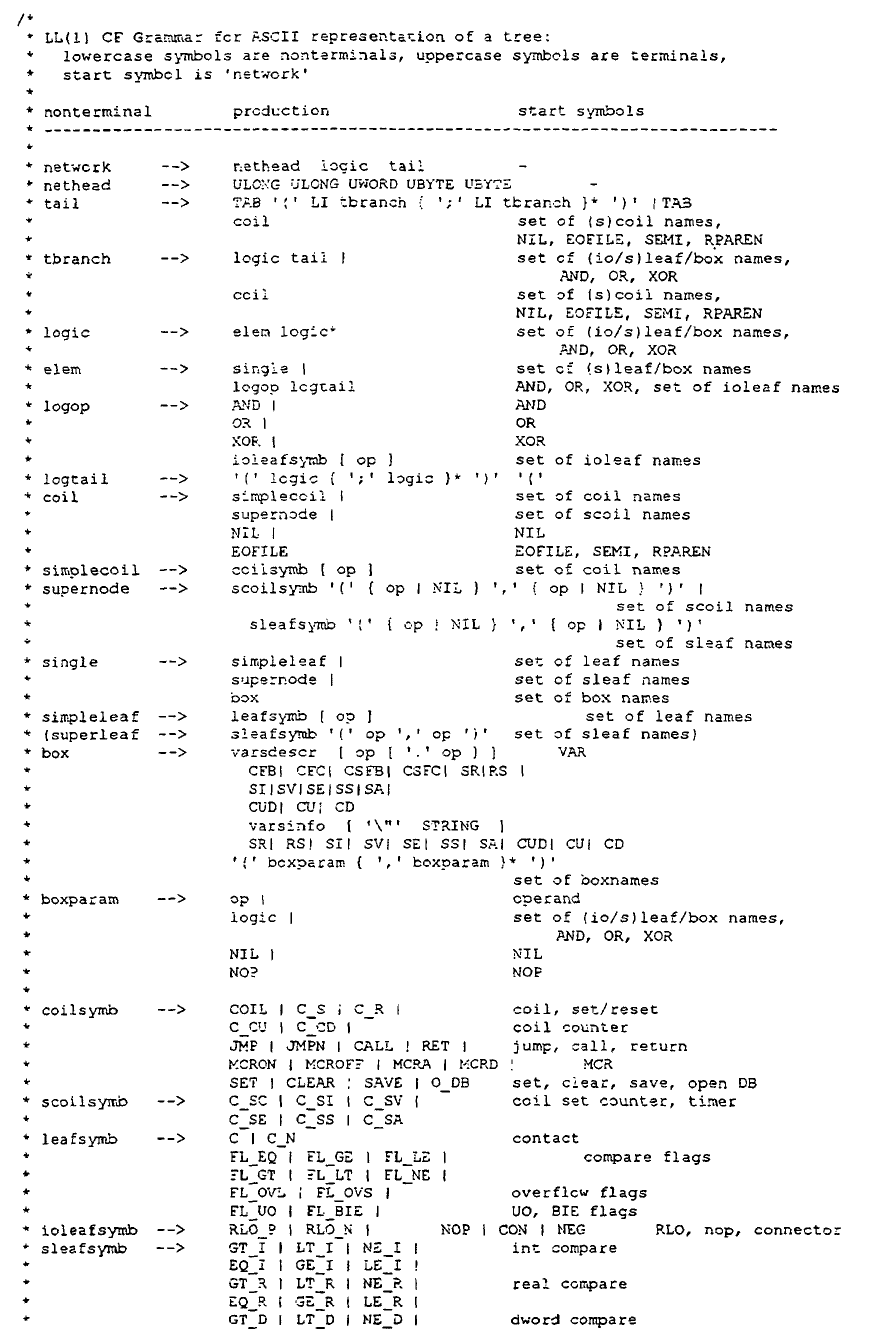

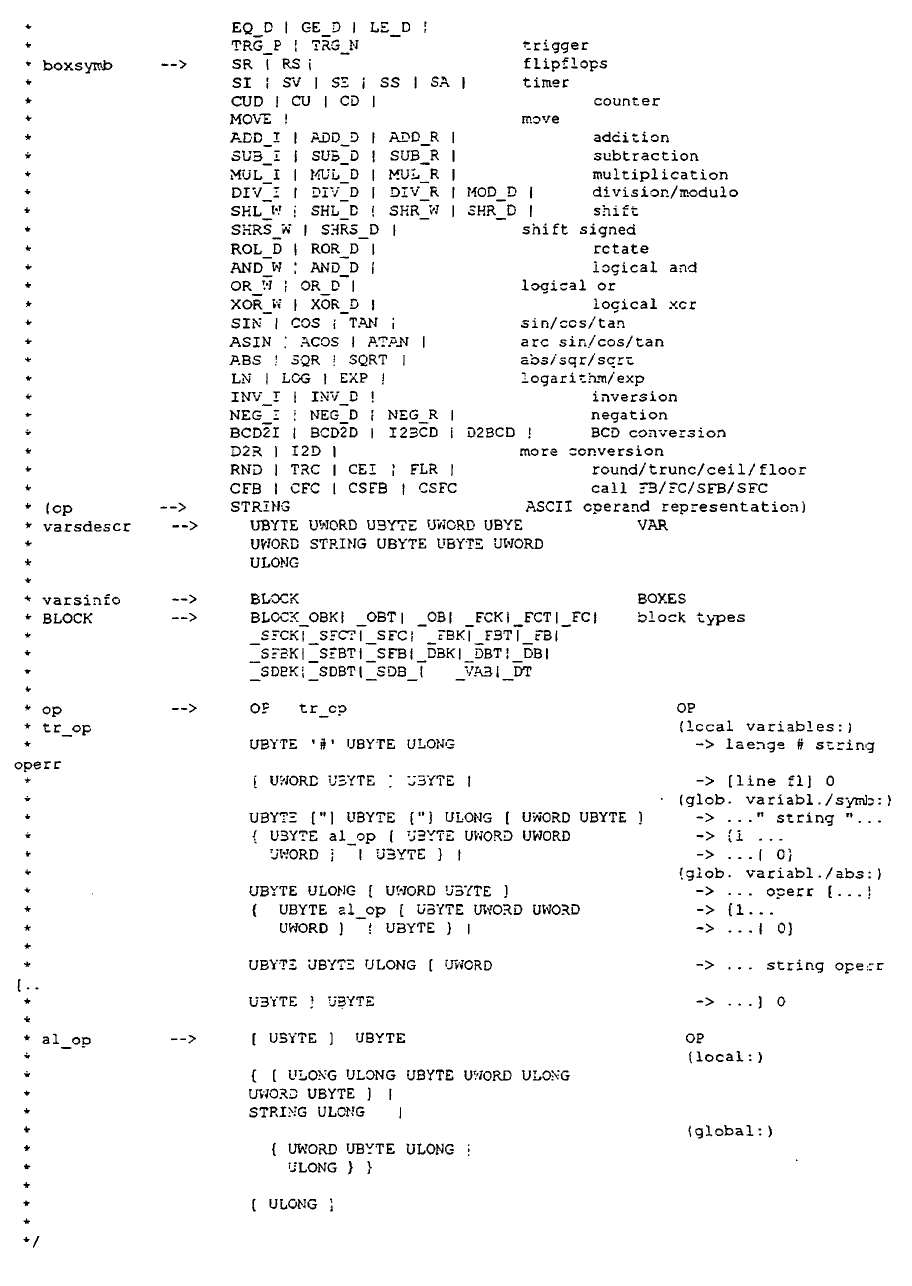

## Patentansprüche

1. Verfahren zur Programmierung eines Automatisierungsgerätes mit einem Programm in einem in einer graphischen Programmiersprache erstellten Anwenderprogramm, wobei das Programm in einzelne Netzwerke zerfällt, die jeweils einen logischen Ausdruck realisieren und sich der logische Ausdruck - mit verschiedenen Operanden versehen - wiederholt, **dadurch gekennzeichnet, daß** ein Muster-Netzwerk als änderbare Zeichenkette abgelegt wird, welche statt Operanden Platzhalter enthält.

## Claims

1. Method for programming an automatic device using a program created in a graphical programming language within a user program, such that the program divides into individual networks each of which performs a logical expression and the logical expression (provided with different operands) recurs, **characterised in that** a network template is stored as an editable string which contains placeholders instead of operands.

## Revendications

1. Procédé de programmation d'un système automatisé avec un programme dans un programme d'application élaboré dans un langage de programmation graphique, le programme se décomposant en différents réseaux qui réalisent chacun une expression logique et l'expression logique se répétant - avec des opérandes différents -, **caractérisé par le fait qu'**on enregistre un réseau modèle sous forme de chaîne de caractères variable qui contient des réserves de place au lieu d'opérandes.
